# FASCICULE DE BREVET EUROPEEN

(11) **EP 2 132 558 B1**
(45) Date de publication et mention de la délivrance du brevet: **09.08.2017**
(21) Numéro de dépôt: 08718263.0
(22) Date de dépôt: 27.03.2008
(51) Int. Cl.: G01N 23/207, G01N 23/223, G21K 1/06

(54) **DISPOSITIF D'ANALYSE D'UN ECHANTILLON PAR RAYONS X COMPRENANT UN SYSTEME ANALYSEUR PAR DIFFRACTION FILTRANT EN ENERGIE ET EN ANGLE**
VORRICHTUNG ZUR RÖNTGENANALYSE EINES PRÄPARATS MIT EINEM ENERGIE/WINKEL-FILTER-DIFFRAKTIONSANALYSATORSYSTEM
DEVICE FOR THE X-RAY ANALYSIS OF A SPECIMEN, COMPRISING AN ENERGY/ANGLE-FILTERING DIFFRACTION ANALYSER SYSTEM

(30) Priorité: 30.03.2007 FR 0754151
(43) Date de publication de la demande: 16.12.2009
(73) Titulaire: Centre National de la Recherche Scientifique (C.N.R.S.), 75016 Paris (FR)
(72) Inventeur: HODEAU, Jean-Louis, F-38042 Grenoble (FR); BORDET, Pierre, Henri, Michel, F-38170 Seyssinet-Pariset (FR); GIANONCELLI, Alessandra, F-75003 Paris (FR); ORTEGA, Luc, F-38100 Grenoble (FR); PRAT, Alain, F-73800 Laissaud (FR); WALTER, Philippe, F-92210 Saint-Cloud (FR); SALOMON, Joseph, F-75011 Paris (FR); DOORYHEE, Eric, F-38120 St Egreve (FR)
(74) Mandataire: Regimbeau
(86) Numéro de dépôt international: PCT/EP2008/053618
(87) Numéro de publication internationale: WO 2008/125450

(56) Documents cités:
- EP-A2- 0 782 842
- WO-A-00/19187
- WO-A-96/34274
- WO-A1-99/27203
- WO-A1-03/018140
- FR-A- 2 579 752
- US-A- 4 131 794
- US-A- 5 746 533

## Description

### DOMAINE DE L'INVENTION

La présente invention concerne le domaine de l'analyse d'échantillons par l'utilisation des rayons X.

Elle concerne plus particulièrement un dispositif d'analyse d'échantillons par diffraction des rayons X.

### ETAT DE LA TECHNIQUE

La diffractométrie des rayons X est une technique d'analyse basée sur la diffraction des rayons X sur la matière, qui permet de caractériser en détail la structure d'un échantillon. Cette technique permet notamment de caractériser la structure cristallographique d'un échantillon, sa composition exacte en termes de composés et de proportion, les transformations éventuelles qu'il a pu subir, la microstructure, la taille des cristallites et leurs orientations, les contraintes, etc.

Un dispositif simple permettant de faire de la diffraction sur poudres ou sur un échantillon polycristallin est la chambre de Debye-Scherrer qui se compose d'une source monochromatique de rayons X, d'un porte-échantillon et d'un film en forme de bande qui entoure le dispositif. Les rayons X sont diffractés par l'échantillon en direction du film, et laissent des traces sous forme de cercles pour former un diffractogramme. Ce dispositif est très simple, peu coûteux, et permet de localiser aisément la position des pics (rayon de l'arc de cercle sur la bande), mais, du fait de la difficulté d'y inclure des fentes ou filtres *ad-hoc,* la trace photographique collecte l'ensemble du signal et donc collecte également le signal de l'environnement de l'échantillon, ce qui rend peu précise l'estimation de l'intensité et de la largeur des pics de diffraction, et donc l'analyse structurale correspondante de l'échantillon.

En conséquence, il a souvent été proposé de remplacer le film par un ensemble mobile constitué d'un détecteur ponctuel associé à des fentes ou à un filtre-analyseur, cet ensemble permettant de collecter une information plus précise en un point, selon une direction de diffraction particulière. Pour obtenir un meilleur rapport signal/bruit et une meilleure définition des formes de raies, on utilise souvent dans ce type de dispositif un cristal analyseur, placé entre l'échantillon à analyser et le détecteur, qui permet de filtrer les rayons en énergie et/ou de collecter un plus grand nombre de rayons X diffractés par l'échantillon pour les focaliser vers le détecteur ponctuel. Un tel dispositif a donc permis de gagner soit en précision, soit en intensité. Néanmoins, l'analyse est très longue puisqu'il est nécessaire de faire des mesures pour chacune des directions de diffraction. Elle demande en outre une instrumentation mécanique précise puisqu'il est nécessaire de mettre en mouvement l'échantillon et/ou l'ensemble « détecteur - analyseur ». L'analyse est rendue encore plus délicate lorsque l'échantillon à analyser est encombrant ou lorsqu'il ne peut être déplacé aisément.

Le document FR 2 579 752 décrit un spectromètre de fluorescence X comprenant un monochromateur toroïdal à spirale logarithmique. Plus précisément, le spectromètre comprend une source pour l'émission de rayons X sur un échantillon à analyser, celui-ci émettant des rayons X diffractés en direction du monochromateur toroïdal à spirale logarithmique qui vient focaliser les rayons sur un détecteur.

Le développement des détecteurs unidimensionnels ou bidimensionnels (du type « Image Plate », détecteur à couplage de charges CCD, etc.) a permis aux études de diffraction, de fluorescence et d'imagerie, d'améliorer la statistique des analyses et leur facilité d'usage par rapport à l'utilisation de films classiques. Il a également permis des gains de temps énormes par rapport à l'utilisation d'un détecteur ponctuel mobile. Malheureusement ces détecteurs unidimensionnels ou bidimensionnels n'ont pas, ou ont un mauvais filtrage et/ou résolution en énergie du signal reçu, ce qui peut entraîner un rapport signal sur fond médiocre, et une analyse résultante encore trop imprécise.

Un but de la présente invention est de proposer un dispositif d'analyse d'un échantillon par diffraction des rayons X permettant de résoudre au moins l'un des inconvénients précités.

Un but de la présente invention est plus particulièrement de proposer un dispositif d'analyse d'un échantillon par diffraction des rayons X permettant un filtrage chromatique et angulaire des rayons X diffractés compatible avec un système de détection unidimensionnel ou bidimensionnel et permettant de conserver une information unidimensionnelle ou bidimensionnelle.

Un autre but de la présente invention est de proposer un dispositif simple, performant, adapté pour l'analyse d'échantillons encombrants et non déplaçables.

### EXPOSE DE L'INVENTION

A cette fin, on prévoit un dispositif d'analyse d'un échantillon par rayons X tel que défini à la revendication 1 annexée et aux revendications qui en dépendent.

L'agencement et la forme particulière du système analyseur par rapport à la zone échantillon permet de collecter les rayons X diffractés selon une pluralité de directions de diffraction tout en améliorant le rapport signal sur fond, et conduit en conséquence à une analyse de la zone échantillon plus précise.

Des aspects préférés mais non limitatifs du dispositif d'analyse sont les suivants :
▪ l'axe de révolution est sensiblement perpendiculaire à la direction d'incidence ;
▪ la surface de révolution partielle est générée depuis le plan moyen par rotation du profil par rapport à l'axe de révolution d'un angle inférieur à 360°, préférentiellement inférieur à 180°, et encore plus préférentiellement compris entre 2° et 80° ;
▪ le dispositif comprend en outre moyen de détection de fluorescence pour l'analyse du rayonnement de fluorescence de l'échantillon, le moyen de détection de fluorescence étant agencé sensiblement perpendiculaire au plan moyen ;
▪ le profil peut être droit, ou courbe avec une concavité orientée vers la zone d'analyse de l'échantillon ;
▪ le profil peut être une portion de courbe spirale-logarithmique, la courbe spirale-logarithmique ayant par exemple pour centre le centre de la zone d'analyse ;
▪ le dispositif comprend en outre des fentes associées en entrée et en sortie du système analyseur ;
▪ la surface diffractante comprend un dépôt monocristallin de graphite pyrolytique ;
▪ la surface diffractante comprend un dépôt multicouche ;
▪ la surface diffractante comprend un pavage de monocristaux ;
▪ la surface diffractante est adaptée pour permettre une analyse en énergie en mode réflexion ;
▪ le moyen de détection est unidimensionnel ou bidimensionnel ;
▪ le moyen de génération, le système analyseur, et le moyen de détection sont fixes les uns par rapport aux autres.

### DESCRIPTION DES FIGURES

D'autres caractéristiques et avantages ressortiront encore de la description qui suit, laquelle est purement illustrative et non limitative et doit être lue en regard des figures annexées parmi lesquelles :
- La figure 1 est une vue schématique en projection plane, parallèlement à l'axe de révolution, du dispositif d'analyse d'un échantillon par diffraction rayons X ;
- La figure 2 est une vue en coupe du système analyseur d'un dispositif d'analyse selon un premier mode de réalisation (section diffractante droite), dans le plan moyen d'analyse contenant l'axe de révolution ;
- La figure 3 est une vue en coupe du système analyseur d'un dispositif d'analyse selon un deuxième mode de réalisation (section diffractante courbe), dans le plan moyen d'analyse contenant l'axe de révolution ;
- La figure 4 est une représentation tridimensionnelle du dispositif d'analyse de la figure 3 ;
- La figure 5 met en parallèle les diagrammes mesurés avec (C2) ou sans (C1) système analyseur, sur une poudre test ;
- La figure 6 met en parallèle les diagrammes mesurés avec (C4) ou sans (C3) système analyseur, sur un échantillon test complexe ;
- La figure 7 est un diagramme de l'échantillon test des diagrammes de la figure 6, mesuré avec un diffractomètre à haute résolution, avec le balayage d'un ensemble « détecteur ponctuel - analyseur » ;
- La figure 8 met en parallèle les diagrammes mesurés avec (C6) ou sans (C5) système analyseur, sur un échantillon composé de gros grains ;
- La figure 9 est une vue en coupe du système analyseur d'un dispositif d'analyse selon un troisième mode de réalisation (section diffractante courbe de grande dimension), dans le plan moyen d'analyse contenant l'axe de révolution.

### DESCRIPTION DETAILLEE DE L'INVENTION

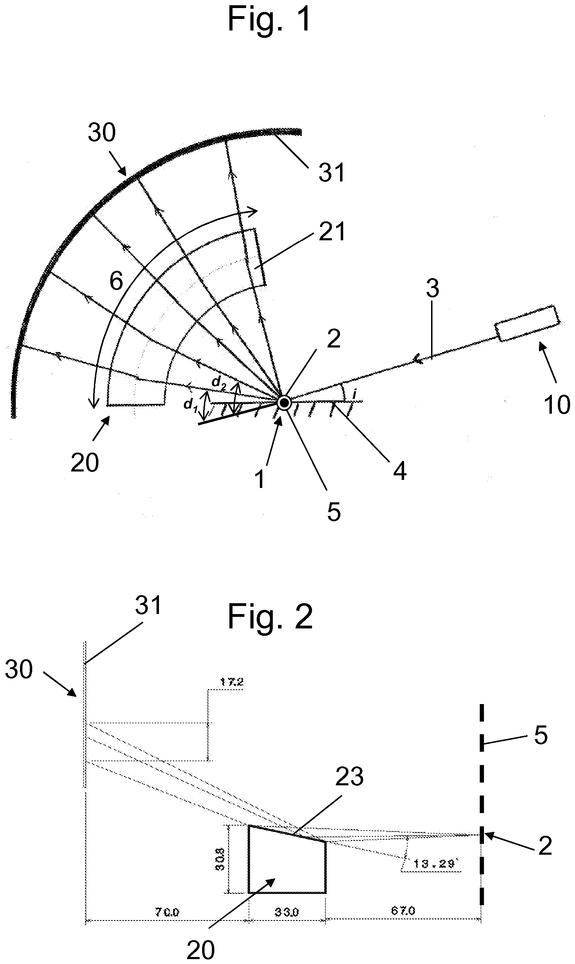

La figure 1 représente schématiquement le dispositif d'analyse de l'invention permettant d'analyser un échantillon 1 par diffraction des rayons X.

Ce dispositif d'analyse comprend un moyen de génération 10 d'un faisceau de rayons X permettant d'irradier l'échantillon 1 à analyser. Il pourra par exemple être utilisé une source de rayons X émettant des faisceaux monochromatiques ou polychromatiques.

Cette source 10 émet des rayons X sur l'échantillon 1 à analyser, et plus particulièrement sur une zone d'analyse 2 de l'échantillon 1 pour laquelle on cherche à caractériser la structure. L'échantillon 1 à analyser peut être une poudre auquel cas la zone d'analyse 2 est ponctuelle. Lorsque la zone d'analyse 2 correspond à une surface étendue, elle définit un plan moyen 4 d'analyse. Le faisceau de rayons X est émis selon une direction d'incidence 3 ayant un angle i d'incidence par rapport au plan moyen 4.

Les rayons X diffractés par la zone d'analyse 2 irradiée sont captés par un moyen de détection 30, qui peut être unidimensionnel ou bidimensionnel, c'est à dire qu'il permet une détection selon au moins une direction. Tout type de détecteur unidimensionnel ou bidimensionnel courbe peut être utilisé, même si l'on préférera des détecteurs performants et précis de type « Image Plate » (cependant, l'utilisation d'un détecteur plat ne fait pas partie de l'invention) ou des détecteurs à couplage de charges CCD (Charge Coupled Device). Pour la surface de détection 31, une surface importante étant une fois encore préférée, de manière à collecter un maximum de rayons X diffractés. Une surface de révolution est également préférée pour éviter une déformation importante du diagramme de diffraction.

On prévoit en outre un système analyseur 20 placé entre l'échantillon 1 et le détecteur unidimensionnel ou bidimensionnel 30. La fonction première de ce système analyseur 20 est de filtrer en énergie les rayons X diffractés par la zone d'analyse 2. A cette fin, le système analyseur a une surface diffractante 21 recouverte d'un dépôt diffractant dont les plans cristallins assurent le filtrage en énergie. Ce dépôt peut être monocouche, comme par exemple un dépôt monocristallin de graphite pyrolytique auquel cas le filtrage est assuré par les raies du type (002). La surface diffractante 21 peut également consister en un dépôt multicouche ou un pavage de monocristaux par exemple Si, Ge, SiO2, LiF, etc...) pour réduire ou élargir la bande passante en énergie. La géométrie, l'épaisseur et la nature de la surface 21 du système analyseur 20 sont donc adaptées pour filtrer les faisceaux en mode réflexion. La géométrie, l'épaisseur et la nature de cette surface diffractante peuvent également être conçues de manière à filtrer les faisceaux en mode transmission.

Le système analyseur 20 utilisé a en outre une forme et un agencement particulier permettant de collecter les rayons X diffractés par l'échantillon selon une pluralité de directions de diffraction (chacune de ces directions j de diffraction étant caractérisée par un angle de diffraction *dⱼ* différent), puis de réfléchir ces rayons X filtrés vers la surface de détection 31 du détecteur bidimensionnel 30.

Pour ce faire, la surface diffractante 21 du système analyseur 20 a globalement une forme de « croissant de lune » ayant une orientation fixe par rapport au plan moyen d'analyse 4.

La surface diffractante 21 est une surface de révolution partielle autour d'un axe de révolution 5, cet axe de révolution 5 passant par le centre de la zone d'analyse 2 avec une direction différente de la direction d'incidence 3. L'axe de révolution 5 est préférentiellement différent de l'axe joignant le centre de la zone d'analyse 2 au milieu du détecteur 30. Selon un mode préféré, l'axe de révolution 5 est en outre sensiblement perpendiculaire à la direction d'incidence 3. Lorsque la zone d'analyse 2 correspond à une surface étendue définissant un plan moyen d'analyse 4, l'axe de révolution 5 est préférentiellement situé dans le plan moyen d'analyse 4.

En outre, la surface diffractante 21 est orientée de manière à réfléchir les rayons X vers le détecteur unidimensionnel ou bidimensionnel 30, plus précisément vers la surface de détection 31 du détecteur 30.

La section de la surface diffractante 21 dans un plan contenant l'axe de révolution 5 et un faisceau diffracté, comme par exemple le plan moyen d'analyse 4, définit un profil 23. La surface de révolution partielle formant la surface diffractante 21 peut également être définie comme la surface engendrée par la rotation du profil 23 par rapport à l'axe de révolution 5. De manière préférée, la surface de révolution est partielle et pas totale de sorte que le faisceau incident de rayons X émis par la source 10 puisse atteindre la zone échantillon d'analyse 2. Si cette surface de révolution est totale, c'est à dire engendrée par une rotation de 360° du profil 23 autour de l'axe de révolution 5, il faut prévoir un orifice traversant le système analyseur pour que le faisceau incident de rayons X émis par la source 10 puisse atteindre la zone échantillon d'analyse 2. Dans un mode de réalisation particulier, la surface de révolution est générée depuis le plan moyen d'analyse 4 par rotation du profil 23 par rapport à l'axe de révolution 5.

Définissons l'angle d'ouverture de la surface de révolution partielle comme l'angle 6 correspondant à la rotation partielle du profil 23 pour générer la surface diffractante. Plus l'angle d'ouverture 6 sera grand et plus le système analyseur pourra capter de directions de diffraction *dⱼ* différentes des rayons X diffractés par la zone d'analyse 2. Si l'angle d'ouverture est inférieur à 180°, le dispositif pourra être utilisé pour analyser le signal provenant d'un objet encombrant à étudier (contrôle de la nature des matériaux, contrôle des contraintes et texture de grosses pièces métalliques industrielles, poutres, ailes d'avion, etc.). Ainsi, l'angle d'ouverture 6 sera préférentiellement compris entre 0° et 180°, et selon un mode de réalisation encore plus préféré entre 2° et 80°. Cela permettra par exemple l'installation en parallèle sur le même montage d'un système de détection pour l'analyse du rayonnement de fluorescence émis par l'échantillon, ce système de détection étant agencée sensiblement perpendiculaire au plan moyen (4). Cela permet également de placer aussi un dispositif de repérage/centrage (par exemple constitué de deux diodes lasers) pour permettre les cartographies.

Ainsi, les faisceaux provenant de l'échantillon à analyser sont diffractés par le système analyseur 20 (soit en mode réflexion (Bragg) comme sur les figures 2, 3, et 4, soit en mode transmission (Laue) avec une configuration/géométrie adaptée) dans le plan radial contenant le profil 23 générateur de la surface diffractante 21, ceci pour toutes les directions axiales des faisceaux diffractés par l'échantillon, c'est à dire pour toutes les directions de diffraction *dⱼ*. Il n'est ainsi pas nécessaire d'effectuer des rotations du dispositif ou de l'échantillon pendant l'analyse structurale ce qui simplifie beaucoup les réglages et permet un gain de temps important, tout en permettant un meilleur échantillonnage de l'objet analysé.

La courbure de la surface diffractante 21 a en outre une influence sur le conditionnement des faisceaux en direction du détecteur 30, pour une même direction de diffraction *dⱼ*.

La figure 2 est une vue en coupe du système analyseur 20 du dispositif d'analyse selon un premier mode de réalisation, dans un plan contenant l'axe de révolution et un faisceau diffracté, comme le plan moyen d'analyse 4 par exemple. Dans ce mode de réalisation, le profil 23, générateur de la surface diffractante 21, est droit, selon une inclinaison permettant aux rayons, arrivant depuis la zone analyse 2 de l'échantillon 1, d'être réfléchis sur la surface du détecteur 31.

Un système analyseur 20 ayant une surface diffractante 21 générée par un tel profil droit permet une analyse monochromatique des rayons dans toutes les directions de diffraction *dⱼ* mais pour un seul angle dans le plan radial perpendiculaire. Ainsi, pour une même direction de diffraction, les rayons diffractés depuis l'échantillon 1 arrivant sur la surface diffractante 21 avec des directions d'incidence différentes ne sont réfléchis que pour une énergie donnée avec une direction également différente, conformément à la loi de Bragg (voir figure 2).

La figure 2 représente la section radiale d'un système analyseur 20 ayant une surface diffractante 21 à profil 23 droit, pour un dépôt de graphite et un rayonnement X Cu-Kalpha, avec une distance objet-détecteur de 170 mm, une largeur de l'analyseur de 33 mm (la largeur de l'analyseur correspondant à la projection du profil 23 dans le plan contenant l'axe de révolution et un faisceau diffracté, comme le plan moyen d'analyse 4 par exemple) et une acceptance angulaire de 0.4°, ce qui correspond à une ligne de lecture sur le détecteur de environ 1 mm pour une énergie donnée, les autres faisceaux correspondent à des énergies différentes. En utilisant une large bande sur le détecteur, une bande en énergie peut aussi être analysée pour quantifier en parallèle la fluorescence et la diffusion inélastique de l'échantillon.

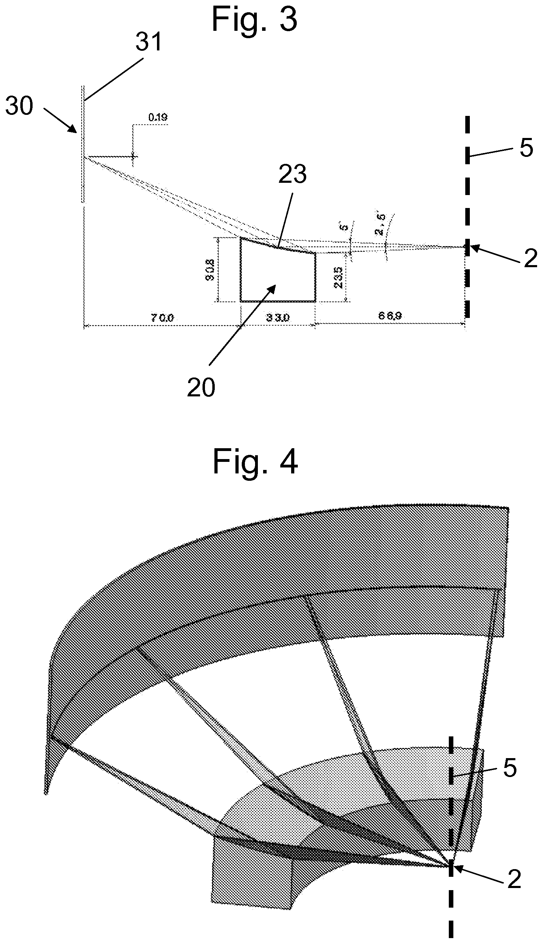

Selon un deuxième mode de réalisation, la surface diffractante 21 du système analyseur 20 est définie par un profil 23 courbe. On choisira préférentiellement un profil 23 avec une courbure dont la concavité est orientée en direction de la zone d'analyse 2 de l'échantillon 1 (figure 3).

On pourra par exemple choisir un profil 23 correspondant à une portion de courbe spirale-logarithmique. Plus particulièrement, on pourra prendre un profil 23 correspondant à une portion de courbe spirale-logarithmique ayant pour centre le centre de la zone d'analyse 2.

Un système analyseur 20 ayant une surface diffractante 21 générée à partir d'un profil 23 radial spiral-logarithmique permet non seulement une analyse monochromatique des rayons dans toutes les directions de diffraction *dⱼ*, mais également une analyse directionnelle de la source des faisceaux radiaux pour chacune de ces directions de diffraction *dⱼ*. Ainsi, pour une même direction de diffraction *dⱼ*, les rayons diffractés depuis l'échantillon 1 arrivant sur la surface diffractante 21 avec des directions d'incidence différentes sont tous réfléchis avec le même angle de Bragg et sont de fait, pour une distance adéquate du détecteur 30, quasi-focalisés sur la surface de détection en une même position. En effet, le gradient d'orientation obtenu pour les plans cristallins parallèles à la surface diffractante de profil spiral-logarithmique permet la satisfaction de la loi de Bragg pour tout un domaine angulaire de faisceaux provenant d'une même source-objet quasi-ponctuelle (voir figure 3). Outre les avantages de simplification de l'analyse liés à la forme de révolution partielle et l'agencement de la surface diffractante du système analyseur, cette courbure particulière permet d'augmenter l'intensité du signal diffracté, par une augmentation du nombre de rayons détectés, il sélectionne une zone source à analyser et permet un meilleur échantillonnage de l'objet analysé.

Il est à noter que la surface diffractante pourra être générée par tout type de profil courbé et n'est pas limitée aux profils spirale-logarithmiques. En effet, il suffit que le profil courbé soit adapté pour focaliser les rayons selon un angle d'acceptance plus ou moins important. La taille de l'analyseur peut également être adaptée pour augmenter l'angle d'acceptance du faisceau diffracté, la capacité angulaire de collection pour une même direction de diffraction *dⱼ* est fonction de l'angle de Bragg du système analyseur (dans l'exemple en mode réflexion présenté sur la figure 3, avec une surface (002) graphite et un rayonnement X Cu-Kalpha, la capacité angulaire de collection peut varier de 1° à 20° environ). L'augmentation de cet angle d'acceptance peut être intéressante en diffraction des poudres ayant des gros grains, pour améliorer l'échantillonnage des cristallites.

La figure 3 représente la section radiale d'un système analyseur 20 ayant une surface diffractante 21 à profil 23 spiral-logarithmique, pour un dépôt de graphite et un rayonnement X Cu-Kalpha, avec une distance échantillon-détecteur de 170 mm, une largeur du système analyseur de 33 mm et une acceptance angulaire de 5°, ce qui correspond à une ligne de lecture monochromatique sur le détecteur inférieure à 1 mm.

La figure 4 est une vue tridimensionnelle illustrant schématiquement la ligne d'analyse sur le détecteur 30 créée par le système analyseur 20 de la figure 3 ayant une surface diffractante 21 à profil 23 spiral-logarithmique.

Le détecteur bidimensionnel 30 est courbe. Si sa courbure est cylindrique avec un axe colinéaire à l'axe de révolution 5 de la surface diffractante 21, alors la projection de l'image bidimensionnelle par l'analyseur courbe peut être une bande ou une ligne comme illustré à la figure 4.

Il a été réalisé, pour des expériences de diffraction sur poudres, des essais en utilisant un système analyseur, en mode réflexion, ayant une surface diffractante définie par un profil droit (figure 2), et comprenant un dépôt de graphite pyrolytique sur la surface courbe. Pour filtrer les énergies la raie (002) a été utilisée, avec un faisceau incident polychromatique (tube à anode de cuivre, raie Cu-Kalpha, puissance 2kW, rayonnement de freinage (Bremsstrahlung) et filtre Ni pour éliminer la raie Cu-Kbeta). Pour ce test, la distance entre la zone d'analyse de l'échantillon et le système analyseur était de 70 mm et l'analyseur avait une largeur de 30 mm. Un détecteur bidimensionnel 30 à surface de détection cylindrique a été placé à une distance de 170 mm de la zone d'analyse de l'échantillon, un système de fentes ayant en outre été utilisé avant et après le système analyseur.

L'acceptance angulaire de la couche de graphite analyseur est de 0,4° et la largeur du faisceau incident de la source de 0,2°. Suivant les fentes, les largeurs des raies de diffraction sont comprises entre 0,3° et 0,5°. Ces essais montrent que, malgré la diminution du signal détecté, l'utilisation du système analyseur permet d'améliorer considérablement le rapport signal/fond.

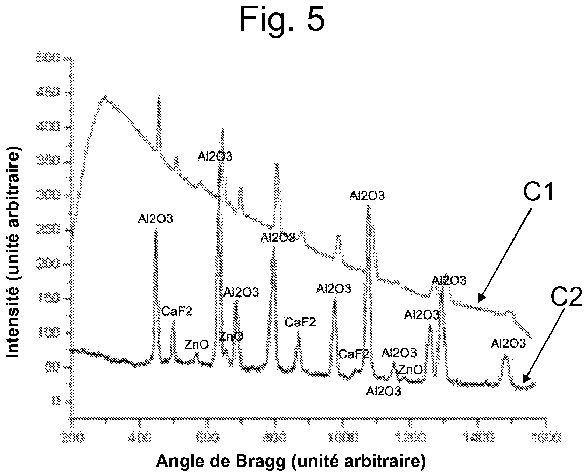

La figure 5 montre les diagrammes représentant l'intensité mesurée en fonction de l'angle de Bragg sur une poudre contenant un mélange test (94,31% Al₂O₃ + 1,36% ZnO + 4.33% CaF₂), la courbe C1 correspondant à la mesure faite sans système analyseur (unité d'intensité divisée par 20) et la courbe C2 correspondant à la mesure faite avec le système analyseur. Par rapport aux mesures sans analyseur la perte de signal sur le pic diffracté est proche d'un facteur 8, alors que le fond diminue d'un facteur compris entre 120 et 60, le rapport signal sur fond s'améliore d'un ordre de grandeur. Avec le système analyseur, le bruit est presque constant en fonction de l'angle de diffraction comme on peut le voir sur la figure 5. Avec un temps d'acquisition de 90 min seulement, il est possible, grâce au système analyseur, de détecter les raies de toutes les phases mineures (jusqu'à 1 %).

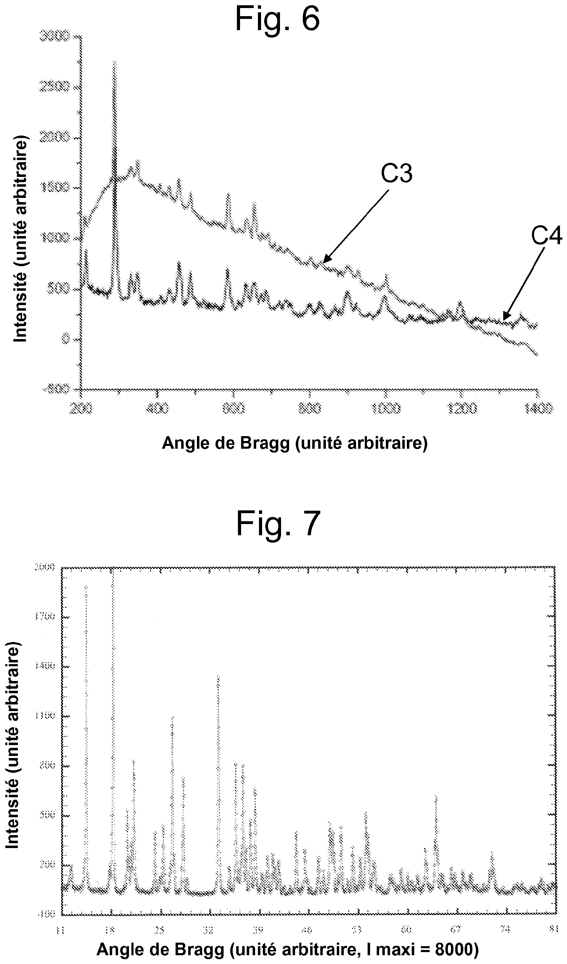

Les diagrammes de la figure 6 correspondent à une mesure de 60 min sur un échantillon complexe de bauxite synthétique qui contient 7 phases (54,90% Gibbsite + 14,93% Boéhmite + 10.00% Hématite + 9.98% Goethite + 5,16% Quartz + 3,02% Kaolinite + 2.00% Anatase) et qui génère une forte fluorescence du fer. La courbe C3 correspond à une mesure faite sans le système analyseur (échelle d'intensité diminuée d'une constante de 1500 unités) et la courbe C4 correspond à une mesure faite avec le système analyseur (intensité multipliée d'un facteur 10). Avec le dispositif d'analyse comprenant le système analyseur, l'intensité des raies diminue d'un facteur proche de 8 et le bruit d'un facteur proche de 80 soit un gain du rapport signal sur bruit de 10.

Le diagramme avec système analyseur sur ce dispositif d'analyse sans mouvement est proche de celui obtenu en 3 heures sur un diffractomètre à haute résolution de laboratoire, ayant un dispositif de balayage en angle de diffraction d'un ensemble analyseur-détecteur ponctuel. La figure 7 illustre le diagramme issu d'une mesure avec un tel dispositif de balayage (de type Philips X'pert) ayant comme source un tube de 40kV 40mA, utilisant le balayage d'un analyseur simple associé à un détecteur ponctuel avec un temps de 3 secondes par point et un pas angulaire de 0,02°.

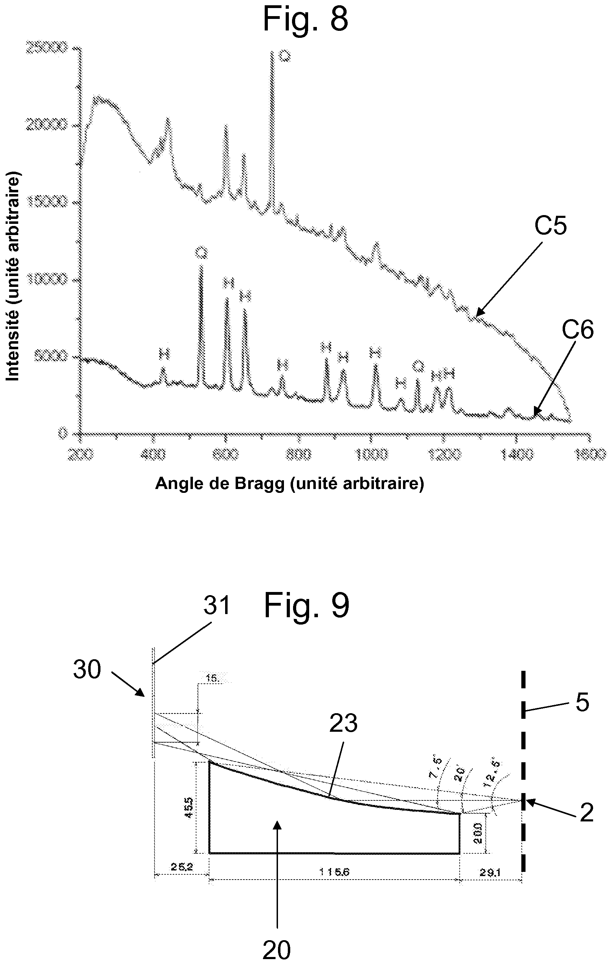

En diffraction sur poudres, avec un échantillon fixe, si les grains à analyser sont gros devant le volume de la zone d'analyse, l'échantillonnage est très mauvais. Les diagrammes de la figure 8 sont obtenus avec et sans système analyseur à profil droit lors de la mesure d'un mélange d'hématite et de gros grains de quartz (0,1-0,2 mm). La courbe C5 représente la mesure sans analyseur (intensité diminuée de 10000 unités) et la courbe C6 la mesure avec analyseur à profil droit (intensité multipliée d'un facteur 10). On constate en effet sur cette figure que les intensités des raies de quartz ne sont pas reproductibles. Néanmoins, cet inconvénient, intrinsèque à la diffraction, peut être minimisé en augmentant l'angle d'acceptance du système analyseur en remplaçant le profil radial droit définissant la surface diffractante par un profil courbe permettant de focaliser les rayons radiaux en un même point, comme par exemple un profil radial spiral-logarithmique ayant pour centre focal la position de l'objet à analyser. Dans ce cas, en mode réflexion, l'angle d'acceptance du dépôt de graphite passera de 0,4° à 5-20°, soit l'équivalent d'une rotation ad-hoc de l'échantillon. Cette forme profil-spiral-logarithmique permet de plus un gain d'intensité potentiel de 12-50.

En utilisant un profil spiral-logarithmique, et en augmentant la largeur du système analyseur, il est possible de réaliser un montage ayant un angle d'acceptance plus large (avec le graphite et la radiation Cu-Kalpha en mode réflexion : de l'ordre de 20°). La figure 9 est une vue en coupe d'un tel dispositif, dans lequel la distance entre la zone analyse de l'échantillon et le système analyseur est de 29,1 mm, l'analyseur a une largeur de 115,6 mm et le détecteur bidimensionnel est placé à une distance de 170 mm de la zone d'analyse de l'échantillon. Les modélisations faites à partir d'un tel dispositif d'analyse montrent, par rapport aux mesures sans analyseur, potentiellement un gain d'intensité des raies (50/8) proche de 6 et une diminution du bruit (50/80) proche de 1/2). Dans cette configuration, l'image sur le film est une bande ayant une largeur d'environ 15 mm. Par un déplacement du détecteur cylindrique de l'objet, il est possible de l'élargir et de conserver une information déformée de l'image de diffraction. Le dispositif proposé permet donc un filtrage en énergie, tout en conservant (avec une déformation) une information bidimensionnelle permettant la caractérisation de l'échantillon, cette configuration peut notamment être utilisée pour filtrer des diagrammes de diffraction 2D de monocristaux.

Si l'on veut transformer l'image bidimensionnelle de l'objet en une ligne sur le détecteur, il est possible d'utiliser un dispositif avec un système analyseur à profil spiral-logarithmique ayant une longueur plus courte, et donc un angle d'acceptance plus faible, de 5° ou même 10°. Par rapport aux mesures sans analyseur, un tel dispositif permettrait potentiellement un gain d'intensité des raies (12/8-25/8) proche de 1,5-3 et une diminution du fond (12/80-25/80) proche de 1/8-1/4. Dans cette configuration, l'image sur le film est une ligne ayant une largeur inférieure à 1 mm (figure 3). Ce type de configuration permet des analyses de diffraction des poudres en série par la seule translation du détecteur cylindrique parallèlement à son axe.

L'utilisation d'un tel système de filtrage chromatique et angulaire avec surface diffractante à profil droit ou profil spiral-logarithmique permet donc d'améliorer énormément le rapport signal/fond. Avec un profil courbe, et plus particulièrement un profil spiral-logarithmique, il est possible de gagner en intensité tout en améliorant l'échantillonnage de l'objet à analyser. Rappelons que ce dispositif peut fonctionner soit en mode réflexion (Bragg) comme sur les figures 2, 3, et 4, soit en mode transmission (Laue) avec une configuration/géométrie adaptée, tenant compte notamment de l'axe de révolution et/ou de la courbure spirale-logarithmique ou autre. En outre, de par la forme et l'agencement particulier du système analyseur, il peut être réalisé un diffractomètre/fluorescencemètre sans pièces mobiles qui permet également une mesure en parallèle de la fluorescence et l'utilisation d'un dispositif de centrage du point analysé de la surface objet.

Le système analyseur proposé a un domaine d'application très large puisqu'il pourra être associé à de multiples montages de diffraction utilisant un détecteur bidimensionnel. Cela concerne :
▪ la diffraction des poudres (analyses de phases, analyses Rietveld et PDF (Pair Distribution Function)), importante dans tous les laboratoires et industries liées à la chimie et à la science des matériaux, mais aussi pour les études sur grands instruments (synchrotron, neutrons), pour notamment diminuer le fond lié à la fluorescence, à la diffusion inélastique et aux environnements de l'échantillon,
▪ la biocristallographie et les analyses sur monocristal (en filtrant en énergie les images de diffraction avec une déformation de celles-ci), afin de diminuer le bruit de fond, pour les résolutions de structures et par exemple pour les collections de données MAD (Multiwavelength Anomalous Diffraction) au rayonnement synchrotron,
▪ la diffraction sur monocristal, de surface ou les expériences in-situ, pour diminuer les bruits de fond provenant des enceintes, de l'environnement ou de la fluorescence.

Avec les courbures et dispositions des analyseurs/détecteurs bidimensionnels qui permettent la transformation optique une "image-2D" en "ligne-1D" et des fentes associées, les applications concernent :
▪ les études cinétiques ou les études de séries sur poudres où un secteur (5° à 10°) de chaque anneau de Debye est focalisé sur un point, le diagramme de poudres étant projeté sur une ligne, ceci concerne des applications en chimie du solide, en pharmacologie, en cartographie de la microstructure ;
▪ la réalisation de diffractomètres/fluorescencemètres portables bénéficiant du bon rapport signal/fond du système analyseur associé au gain de flux et au meilleur échantillonnage lié à la courbure spirale-logarithmique du profil de la surface diffractante ; comme le montre les essais, un tel diffractomètre/fluorescencemètre sans pièces mobiles et portable permet des analyses de matériaux multi-phasés et peut donc s'appliquer pour les études mobiles sur les chantiers archéologiques (analyses murales), les chantiers industriels (contrôle et suivi de matériaux dans une production) et aussi directement sur de très gros objets industriels (texture ou contraintes de poutres, ailes,..).
▪ les mesures de fluorescence des rayons X, à partir du moment où la source est quasi-ponctuelle et d'y inclure des fentes, pour pouvoir sélectionner une énergie (surface diffractante à profil spiral-logarithmique) ou une gamme d'énergie (surface diffractante à profil droit ou à profil courbe avec gradient d'angle), ce dernier profil pouvant fournir un nouveau dispositif de spectroscopie des rayons X par dispersion en longueur d'onde.
▪ Les mesures d'imagerie, à partir du moment où la source est quasi-ponctuelle et si le détecteur 30 est hors de la distance de quasi-focalisation de l'analyseur, pour pouvoir supprimer la diffusion inélastique et la fluorescence (surface diffractante à profil spiral-logarithmique) ; lorsque la source est à l'infini un analyseur plan suffit.

Notons que le dispositif présenté avec système analyseur pourrait également être adapté pour être utilisé dans l'analyse d'échantillons par faisceaux de neutrons.

Le lecteur aura compris que de nombreuses modifications peuvent être apportées sans sortir matériellement des nouveaux enseignements et des avantages décrits ici. Par conséquent, toutes les modifications de ce type sont destinées à être incorporées à l'intérieur de la portée du dispositif d'analyse et du système analyseur décrit.

## Revendications

1. Dispositif d'analyse d'un échantillon (1) par rayons X, comprenant :
▪ Un moyen de génération (10) d'un faisceau de rayons X pour irradier une zone d'analyse (2) de l'échantillon (1), ladite zone d'analyse (2) définissant un plan moyen (4) d'analyse, et le faisceau de rayons X étant émis selon une direction d'incidence (3),
▪ Un moyen de détection (30) selon au moins une dimension des rayons X diffractés par la zone d'analyse (2) irradiée,
▪ Un système analyseur (20) disposé entre l'échantillon (1) et le moyen de détection (30), le système analyseur (20) comprenant une surface (21) diffractante pour les rayons X formant une surface de révolution partielle autour d'un axe de révolution (5) destiné à être contenu dans le plan moyen (4) d'analyse, l'axe de révolution (5) étant distinct de la direction d'incidence (3) et passant par le centre de la zone d'analyse (2), et la surface diffractante (21) étant orientée de manière à diffracter les rayons X vers le moyen de détection (30),
**caractérisé en ce que** le moyen de détection (30) comprend une surface de détection (31) courbe formant une surface cylindrique partielle ayant un axe de révolution, appelé axe de révolution de détection, et **en ce que** l'axe de révolution (5) est le même que l'axe de révolution de détection.

2. Dispositif selon la revendication 1, **caractérisé en ce que** l'axe de révolution (5) est sensiblement perpendiculaire à la direction d'incidence (3).

3. Dispositif selon l'une des revendications 1 ou 2, **caractérisé en ce que** la surface de révolution partielle est générée par une rotation partielle d'un profil (23) défini comme la section de la surface diffractante (21) dans un plan contenant l'axe de révolution (5) et un faisceau diffracté.

4. Dispositif selon la revendication 3, **caractérisé en ce que** la surface de révolution partielle est générée par une rotation du profil (23) par rapport à l'axe de révolution (5) d'un angle inférieur à 360°, préférentiellement inférieur à 180°, et encore plus préférentiellement compris entre 2° et 80°.

5. Dispositif selon la revendication 4, **caractérisé en ce qu'**il comprend en outre moyen de détection de fluorescence pour l'analyse du rayonnement de fluorescence de l'échantillon, le moyen de détection de fluorescence étant destiné à être agencé sensiblement perpendiculaire au plan moyen (4).

6. Dispositif selon l'une des revendications 3 à 5, **caractérisé en ce que** le profil (23) est droit.

7. Dispositif selon l'une des revendications 3 à 5, **caractérisé en ce que** le profil (23) est courbe avec une concavité orientée vers la zone d'analyse (2) de l'échantillon (1).

8. Dispositif selon l'une des revendications 3 à 5, **caractérisé en ce que** le profil (23) est une portion de courbe spirale-logarithmique.

9. Dispositif selon la revendication 8, **caractérisé en ce que** la courbe spirale-logarithmique a pour centre le centre de la zone d'analyse (2).

10. Dispositif selon l'une quelconque des revendications précédentes, **caractérisé en ce que** la surface diffractante (21) comprend un dépôt monocristallin de graphite pyrolytique.

11. Dispositif selon l'une quelconque des revendications 1 à 9, **caractérisé en ce que** la surface diffractante (21) comprend un dépôt multicouche.

12. Dispositif selon l'une quelconque des revendications 1 à 9, **caractérisé en ce que** la surface diffractante (21) comprend un pavage de monocristaux.

13. Dispositif selon l'une quelconque des revendications précédentes, **caractérisé en ce que** la surface diffractante (21) est adaptée pour permettre une analyse en énergie en mode réflexion.

14. Dispositif selon l'une quelconque des revendications 1 à 13, **caractérisé en ce que** le moyen de détection (30) est bidimensionnel.

15. Dispositif selon l'une quelconque des revendications précédentes, **caractérisé en ce que** le moyen de génération (10), le système analyseur (20), et le moyen de détection (30) sont fixes les uns par rapport aux autres.

## Patentansprüche

1. Vorrichtung zur Röntgenanalyse einer Probe (1), umfassend:
▪ ein Erzeugungsmittel (10) eines Röntgenstrahlenstrahls, um eine Analysezone (2) der Probe (1) zu bestrahlen, wobei die Analysezone (2) eine mittlere Analyseebene (4) definiert, und der Röntgenstrahlenstrahl gemäß einer Einfallsrichtung (3) gesendet wird,
▪ ein Detektionsmittel (30) gemäß mindestens einer Dimension der von der bestrahlten Analysezone (2) diffraktierten Röntgenstrahlen,
▪ ein zwischen der Probe (1) und dem Detektionsmittel (30) angeordnetes Analysesystem (20),
wobei das Analysesystem (20) eine für die Röntgenstrahlen diffraktierende Fläche (21) umfasst, die eine Teilrotationsfläche um eine Rotationsachse (5) bildet, die bestimmt ist, in der mittleren Analyseebene (4) enthalten zu sein, wobei sich die Rotationsachse (5) von der Einfallsrichtung (3) unterscheidet und durch das Zentrum der Analysezone (2) verläuft und wobei die diffraktierende Fläche (21) derart ausgerichtet ist, dass die Röntgenstrahlen zum Detektionsmittel (30) diffraktiert werden,
**dadurch gekennzeichnet, dass** das Detektionsmittel (30) eine gekrümmte Detektionsfläche (31) umfasst, die eine teilzylindrische Fläche mit einer Rotationsachse, als Detektionsrotationsachse bezeichnet, bildet, und dass die Rotationsachse (5) dieselbe wie die Detektionsrotationsachse ist.

2. Vorrichtung nach Anspruch 1, **dadurch gekennzeichnet, dass** die Rotationsachse (5) etwa senkrecht zur Einfallsrichtung (3) ist.

3. Vorrichtung nach einem der Ansprüche 1 oder 2, **dadurch gekennzeichnet, dass** Teilrotationsfläche von der Teilrotation eines Profils (23) erzeugt wird, das als Schnitt der diffraktierenden Fläche (21) in einer Ebene definiert ist, welche die Rotationsachse (5) und einen diffraktierten Strahl enthält.

4. Vorrichtung nach Anspruch 3, **dadurch gekennzeichnet, dass** die Teilrotationsfläche ab der mittleren Ebene durch eine Rotation des Profils (23) in Bezug zur Rotationsachse (5) eines Winkels unter 360°, vorzugsweise unter 180°, und in noch bevorzugterer Weise zwischen 2° und 80°, inklusive erzeugt wird.

5. Vorrichtung nach Anspruch 4, **dadurch gekennzeichnet, dass** sie ferner Fluoreszenzdetektionsmittel für die Analyse der Fluoreszenzstrahlung der Probe umfasst, wobei das Fluoreszenzdetektionsmittel bestimmt ist, etwa senkrecht zur mittleren Ebene (4) ausgerichtet zu sein.

6. Vorrichtung nach einem der Ansprüche 3 bis 5, **dadurch gekennzeichnet, dass** das Profil (23) gerade ist.

7. Vorrichtung nach einem der Ansprüche 3 bis 5, **dadurch gekennzeichnet, dass** das Profil (23) mit einer Konkavität, die zur Analysezone (2) der Probe (1) zeigt, gekrümmt ist.

8. Vorrichtung nach einem der Ansprüche 3 bis 5, **dadurch gekennzeichnet, dass** das Profil (23) ein spiral-logarithmischer Kurvenabschnitt ist.

9. Vorrichtung nach Anspruch 8, **dadurch gekennzeichnet, dass** die spiral-logarithmische Kurve das Zentrum der Analysezone (2) als Zentrum hat.

10. Vorrichtung nach einem der vorangehenden Ansprüche, **dadurch gekennzeichnet, dass** die diffraktierende Fläche (21) eine monokristalline Ablagerung pyrolytischen Graphits umfasst.

11. Vorrichtung nach einem der Ansprüche 1 bis 9, **dadurch gekennzeichnet, dass** die diffraktierende Fläche (21) eine mehrschichtige Ablagerung umfasst.

12. Vorrichtung nach einem der Ansprüche 1 bis 9, **dadurch gekennzeichnet, dass** die diffraktierende Fläche (21) eine Pflasterung aus Monokristallen umfasst.

13. Vorrichtung nach einem der vorangehenden Ansprüche, **dadurch gekennzeichnet, dass** die diffraktierende Fläche (21) ausgebildet ist, um eine Energieanalyse im Reflexionsmodus zu erlauben.

14. Vorrichtung nach einem der Ansprüche 1 bis 13, **dadurch gekennzeichnet, dass** das Detektionsmittel (30) zweidimensional ist.

15. Vorrichtung nach einem der vorangehenden Ansprüche, **dadurch gekennzeichnet, dass** das Erzeugungsmittel (10), das Analysesystem (20) und das Detektionsmittel (30) in Bezug zueinander befestigt sind.

## Claims

1. A device for X-ray analysis of a sample (1), comprising:
▪ a generation means (10) for the generation of an X-ray beam to irradiate an analysis zone (2) of the sample (1), said analysis zone (2) defining an analysis mean plane (4), and the X-ray beam being emitted along a direction of incidence (3),
▪ a detection means (30) for the detection, in at least one dimension, of X-rays diffracted by the irradiated analysis zone (2),
▪ an analyser system (20) located between the sample (1) and the detection means (30),
wherein the analyser system (20) comprises a X-ray diffracting surface (21) forming a partial surface of revolution about an axis of revolution (5) intended to be contained in the analysis mean plane (4), with the axis of revolution (5) being distinct from the direction of incidence (3) and passing through the centre of the analysis zone (2), and with the diffracting surface (21) being oriented so as to diffract the X-rays toward the detection means (30),
**characterized in that** the detection means (30) comprises a curved detection surface (31) forming a partial cylindrical surface having an axis of revolution, called detection axis of revolution, and **in that** the axis of revolution (5) is the same as the detection axis of revolution.

2. The device according to claim 1, **characterized in that** the axis of revolution (5) is substantially perpendicular to the direction of incidence (3).

3. The device according to one of claims 1 or 2, **characterized in that** the partial surface of revolution is generated by a partial rotation of a profile (23) defined as the section of the diffracting surface (21) in a plane containing the axis of revolution (5) and a diffracted beam.

4. The device according to claim 3, **characterized in that** the partial surface of revolution is generated by rotation of the profile (23) about the axis of revolution (5), by an angle less than 360°, preferably less than 180°, and yet more preferably comprised between 2° and 80°.

5. The device according to claim 4, **characterized in that** it further comprises a fluorescence detection means for analysis of the fluorescence radiation from the sample, with the fluorescence detection means being arranged substantially perpendicular to the mean plane (4).

6. The device according to one of claims 3 to 5, **characterized in that** the profile (23) is straight.

7. The device according to one of claims 3 to 5, **characterized in that** the profile (23) is curved with a concavity oriented toward the analysis zone (2) of the sample (1).

8. The device according to one of claims 3 to 5, **characterized in that** the profile (23) is a portion of a logarithmic-spiral curve.

9. The device according to claim 8, **characterized in that** the logarithmic-spiral curve has a centre corresponding to the centre of the analysis zone (2).

10. The device according to any one of the preceding claims, **characterized in that** the diffracting surface (21) comprises a single crystal deposit of pyrolytic graphite.

11. The device according to any one of claims 1 to 9, **characterized in that** the diffracting surface (21) comprises a multilayer deposit.

12. The device according to any one of claims 1 to 9, **characterized in that** the diffracting surface (21) comprises a covering of single crystals.

13. The device according to any one of the preceding claims, **characterized in that** the diffracting surface (21) is designed to allow energy analysis in reflection mode.

14. The device according to any one of claims 1 to 13, **characterized in that** the detection means (30) is two-dimensional.

15. The device according to any one of the preceding claims, **characterized in that** the generation means (10), the analyser system (20), and the detection means (30) are fixed with respect to each other.
